# EUROPEAN PATENT SPECIFICATION

(11) **EP 3 004 546 B1**
(45) Date of publication and mention of the grant of the patent: **30.10.2019**
(21) Application number: 14733356.1
(22) Date of filing: 28.05.2014
(51) Int. Cl.: C04B 41/00, C04B 41/45, B28D 1/00, E21C 41/00

(54) **A METHOD FOR REMOVING A MATERIAL EXTRACTED FROM MINES IN A SINGLE PIECE**
VERFAHREN ZUM ENTFERNEN EINES MATERIALS AUS MINEN IN EINEM STÜCK
PROCÉDÉ PERMETTANT DE RETIRER EN UNE SEULE PIÈCE UN MATÉRIAU EXTRAIT DES MINES

(30) Priority: 29.05.2013 TR 201306415
(43) Date of publication of application: 13.04.2016
(73) Proprietor: Tureks Anonim Sirketi, Afyonkarahisar (TR)
(72) Inventor: TURUNC, Osman Cavit, Afyon (TR)
(74) Representative: Rastelli, Franco
(86) International application number: PCT/IB2014/061776
(87) International publication number: WO 2014/191930

(56) References cited:
- EP-A1- 0 619 416
- WO-A1-2009/133453
- WO-A1-2010/084382

## Description

### Technical Field

The present invention relates to a method which enables to reinforce a block or a work-piece desired to be produced in marble, granite and all kinds of natural stone quarries and in all kinds of organic or inorganic businesses aiming for block production and to produce it on a desired scale without being broken up into smaller pieces involuntarily due to production conditions.

### Background of the Invention

Today, materials such as all kinds of natural stone, granite, marble, travertine are taken from quarries in blocks upon being cut, broken off from mines existing within the nature or by applying a force thereto. Due to cavities, cracks and similar structures provided inside the said materials by their nature it is not possible to produce block in desired standard sizes. Because of these regions consisting of these cavities, cracks or partially weak materials in natural states; accordingly, mass block sizes of structures such as natural stone, travertine, marble, granite occur in non-standard shapes. Besides the biggest block tried to be received during the said production technique; unshaped, rubble, non-standard pieces not having block characteristics occur as well.

The European patent document no. EP1170271 discloses a method for repairing and consolidating a natural stone block with internal fractures and structural discontinuities. In the said method, a coating is applied around the natural stone block and the said block wraps the block under and around thereof such that it will be higher than the block. There is a cavity between the coating and the block and a resin is applied to this cavity. This resin applied enables to consolidate the block.

The International patent document no. WO2009/133453 discloses a method for reinforcing stone blocks in quarries. The objective of the said invention is to reduce the risk of damaging a stone while separating the stone from the bench. In the method disclosed in the International patent document no. WO2009/133453, a stone block is separated from the bench for example by means of the use of a suitable diamond wire cutter at four of its faces. A cavity remains between the block and the bench in the form of an aperture. A resin-based polymerizable coating and a cover layer is applied to the said cavity. The said coating can be applied for example by spraying technique.

Document WO 2010/084382 A1 discloses a reinforcement method used for reinforcing products obtained from materials such as natural stone, travertine, granite, marble, limestone, etc., and characterised in that a channel and/or channels (2) are provided on the first product (200) and that one or more epoxy or polyester based reinforcement materials (3) are applied on the channel and/or channels (2).

However rear and lower sections included in the inventions disclosed in the said reference patent documents do not physically enable to coat the surface by resin entirely, they only enable to apply resin to a single surface which is visible and reachable. Therefore because the force applied for demolition or breaking off, dislocation by means of hydraulic lifter, lift, water or air cushion, excavator-type machines with special apparatuses and even mechanical, manual or automatic jacks is usually less area or point-wise; the single-sided reinforcement performed does not resist and enable pieces at desired sizes to be received.

### Summary of the Invention

An objective of the present invention is to realize a method which enables to produce materials such as marble, travertine, granite, natural stone having natural cracks, cavities and regional different physical and chemical properties at desired standard sizes in blocks.

Another objective of the present invention is to realize a method which enables to reduce production costs of materials such as marble, travertine, granite, natural stone and to increase economical values thereof.

### Detailed Description of the Invention

"A Method for Removing a Material Extracted from Mines in a Single Piece" realized to fulfill the objectives of the present invention is shown in the figure attached, in which:

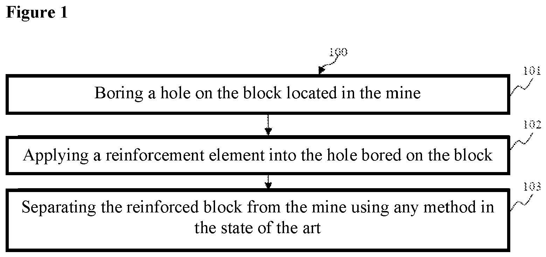

Figure 1 is a flow chart of the inventive method.

The inventive method (100) according to the invention is defined in the appended claim 1.

In the inventive method (100), firstly a plurality of holes are bored on the block located in the mine (101) in the process of extracting material such as marble, travertine, granite, organic natural stone from a mine. Reinforcement element is applied into the holes bored on the block in order to reinforce the block and to prevent it from being broken off during the process of removal from the mine (102). Reinforcement elements can be made of resin, epoxy, polyester. The block reinforced inside the mine is separated from the mine using any method in the state of the art (103). With the present invention, a block resistance of which is increased by means of the reinforcement elements inserted into the mine before separation therefrom is removed from the mine in a single piece without being broken.

In an embodiment of the invention, during the process of first breaking-off or separating the block from the mine it is ensured that the block can remain in a single piece and it is made producible and processable in a single piece against the removal force applied. Thus, this material extracted from the mine in blocks can be re-cut according to smaller blocks or standard sizes in comparison with many criteria determining the economic value such as colour, characteristic, feature. As a result of such standardization, production costs are reduced and economical value of the material produced is increased with bringing environmental conditions under control.

At the step of boring a hole on a material such as marble, travertine, granite, organic natural stone (101) included in the inventive method (100), the hole bored on the block can be in any size which is vertical or horizontal, interrelated, has a specific shape according to the size of the block desired to be extracted. The said hole can be bored by means of all kinds of impact and/or non-impact rotary, cutting, break-off, excavation force which is pneumatic, hydraulic or manual. The reinforcement element is applied into the hole bored using methods such as dumping, infiltration or piling as pressurized or non-pressurized in a liquid, solid paste form.

At the step of applying a reinforcement element into the hole (102) included in the inventive method (100), materials having features enabling to increase resistance of marble, which is low due to internal cracks thereof, are used as the reinforcement element inserted into the hole. In a preferred embodiment of the invention, the reinforcement elements used are carbon fibre bars.

Reinforcement elements can be fed into the hole by means of manual, dumping, infiltration, pressure application methods. In an embodiment of the invention, the holes are covered by apparatuses functioning as single-way valve and like. Thus, it s ensured that the reinforcement element is fed into the hole in a controlled way and the reinforcement element fed into the hole is prevented from getting out of the hole.

In a preferred embodiment of the invention, the holes bored from outer edges such that they will depend on the size of the block desired to be produced are then interrelated. Thus, a reinforcement cage is formed in the block. With the said cage, cracks and cavities included in the block naturally are moved from their natural positions by means of the holes forming the cage at particular points and the reinforcement elements applied into the hole and they can be applied by processes such as re-repair or combining, surface filling.

At the step of separating the reinforced material such as marble, travertine, granite, organic natural stone from the mine (103) included in the inventive method (100), the block reinforced by means of the reinforcement elements are separated from the mine using any of the methods in the state of the art for example such as a cutting method by spiral steel wire; a field disposal method by rock cutters with drilling breaking-off chain and rotating disk, and cutters with cutting claw arm; and a separation and cutting method.

With the inventive method (100), resistance of a block is increased by means of the reinforcement elements inserted into a hole bored on the block before materials such as marble, travertine, granite, organic natural stone are cut and separated from the mines. Thus, a block is prevented from being broken off during separating the block from the mine by cutting. Therefore, material loss is avoided and process efficiency is increased.

## Claims

1. A method (100) for enabling to produce materials such as marble, travertine, granite, natural stone having natural cracks, cavities and regional different physical and chemical properties at desired standard sizes in blocks, including the steps of:
- boring a plurality of holes in a block located in a mine (101);
- applying reinforcement elements into the holes bored into the block by feeding said reinforcement elements into the holes by manual, dumping, infiltration or pressure application methods (102); and
- separating the reinforced block from the mine using any method in the state of the art (103),
wherein said reinforcement elements are made of a material selected from resin, epoxy or polyester, and
wherein said boring comprises a boring method selected from impact and/or non-impact rotary, cutting, break-off, pneumatic, hydraulic or manual boring methods,
wherein in the step of applying said reinforcement elements into the holes, said holes are covered by apparatuses functioning as single-way valve to prevent the reinforcement elements fed into the holes from getting out of the holes and to feed the reinforcing elements into the holes in a controlled way, and
wherein the holes are so arranged as to form a reinforcement cage in the block, and wherein the holes bored from the outer edges of the block are interrelated.

2. A method (100), according to claim 1, **characterized in that** said holes have any desired size and shape and are vertical or horizontal, based on a size of the block to be extracted.

## Patentansprüche

1. Verfahren (100) zur Ermöglichung der Produktion von Materialien wie Marmor, Travertin, Granit und Naturstein, die natürliche Risse, Hohlräume und regional verschiedene physikalische und chemische Eigenschaften aufweisen, nach gewünschten Standardgrößen in Blöcken, das die folgenden Schritte umfasst:
- Bohren von mehreren Löchern in einen Block, der sich in einer Mine (101) befindet;
- Einführen von Verstärkungselementen in die im Block gebohrten Löcher durch Einspeisen der Verstärkungselemente in die Löcher mit manuellen, Schütt-, Infiltrations- oder Druckanwendungsverfahren (102) und
- Trennen des verstärkten Blocks von der Mine unter Einsatz eines beliebigen Verfahrens nach dem Stand der Technik (103),
wobei die Verstärkungselemente aus einem Material bestehen, das aus Harz, Epoxy oder Polyester ausgewählt ist, und
wobei das Bohren ein Bohrverfahren umfasst, das aus Schlag- und/oder Nicht-Schlag-, Rotations-, Schneid-, Abbruch-, Druckluft-, hydraulischen oder manuellen Bohrverfahren ausgewählt wird,
wobei beim Schritt der Einführung der Verstärkungselemente in die Löcher die Löcher mit Vorrichtungen abgedeckt werden, die als Einwegventil fungieren, um zu verhindern, dass die Verstärkungselemente die in die Löcher gespeist werden, aus den Löchern austreten, und um die Verstärkungselemente auf eine kontrollierte Weise in die Löcher einzuspeisen, und
wobei die Löcher so angeordnet sind, dass sie im Block einen Verstärkungskorb bilden, und wobei die von den Außenkanten des Blocks aus gebohrten Löchern zusammenhängend sind.

2. Verfahren (100) nach Anspruch 1, **dadurch gekennzeichnet, dass** die Löcher eine gewünschte Größe und Form haben und vertikal oder horizontal sind basierend auf einer Größe des zu extrahierenden Blocks.

## Revendications

1. Procédé (100) permettant de produire des matériaux tels que du marbre, de la travetine, du granité, de la pierre naturelle présentant des fissures naturelles, des cavités et différentes propriétés physiques et chimiques régionales à des tailles standards souhaitées sous forme de blocs, comprenant les étapes consistant à :
- forer une pluralité de trous dans un bloc situé dans une mine (101) ;
- appliquer des éléments de renfort dans les trous percés dans le bloc en alimentant lesdits éléments de renfort dans les trous au moyen de procédés d'application manuels, de déversement, d'infiltration ou de pression (102) ; et
- séparer le bloc renforcé provenant de la mine en utilisant un quelconque procédé dans l'état de la technique (103),
dans lequel lesdits éléments de renfort sont constitués d'un matériau choisi parmi la résine, l'époxy, le polyester, et
dans lequel ledit forage comprend un procédé de forage choisi parmi des procédés de forage à impact et/ou à non-impact rotatif, de découpe, de cassure, pneumatiques, hydrauliques ou manuels,
dans lequel dans l'étape d'application desdits éléments de renfort dans les trous, lesdits trous sont recouverts d'appareils fonctionnant comme une soupape à sens unique afin d'empêcher les éléments de renfort alimentés dans les trous de sortir des trous et d'alimenter des éléments de renfort dans les trous d'une manière contrôlée, et
dans lequel les trous sont ainsi agencés de façon à former une cage de renfort dans le bloc, et dans lequel les trous percés provenant des bords externes du bloc sont liés entre eux.

2. Procédé (100) selon la revendication 1, **caractérisé en ce que** lesdits trous comportent n'importe quelle taille et forme souhaitée et sont verticaux ou horizontaux, en fonction d'une taille des blocs devant être extraits.
